# FASCICULE DE BREVET EUROPEEN

(11) **EP 3 601 847 B1**
(45) Date de publication et mention de la délivrance du brevet: **05.05.2021**
(21) Numéro de dépôt: 18717259.8
(22) Date de dépôt: 28.03.2018
(51) Int. Cl.: F16H 55/10, F16H 55/14, B64C 25/40, F16D 3/10, F16H 1/22, F16H 37/04, E06B 9/72, E05F 15/603

(54) **REDUCTEUR MECANIQUE A VIS SANS FIN**
MECHANISCHES REDUKTIONSGETRIEBE MIT ENDLOSSCHRAUBE
MECHANICAL REDUCTION GEAR WITH ENDLESS SCREW

(30) Priorité: 29.03.2017 FR 1752652
(43) Date de publication de la demande: 05.02.2020
(73) Titulaire: Delta Dore, 35270 Bonnemain (FR); Moigne, Pascal, 35620 Teillay (FR)
(72) Inventeur: MOIGNE, Pascal, 35620 Teillay (FR); RENAULT, Joël, 35830 Betton (FR); AFFRES, Hamilton, 35000 Rennes (FR)
(74) Mandataire: Cabinet Le Guen Maillet
(86) Numéro de dépôt international: PCT/EP2018/057908
(87) Numéro de publication internationale: WO 2018/178145

(56) Documents cités:
- EP-A2- 1 326 000
- CN-A- 101 752 952

## Description

La présente invention concerne un réducteur mécanique, un ensemble motorisé comportant un tel réducteur mécanique, ainsi qu'un système occultant comprenant un tel ensemble motorisé.

Un système occultant de l'état de la technique, par exemple un volet roulant ou un store banne, comporte classiquement un moteur tubulaire, un tube d'enroulement entraîné en rotation par le moteur tubulaire et un tablier ou une toile qui s'enroule autour du tube d'enroulement.

Le moteur tubulaire comprend entre autres un moteur avec un arbre moteur, un réducteur mécanique avec une entrée qui est l'arbre moteur et un arbre de sortie, et un tube moteur dans lequel le moteur et le réducteur mécanique sont logés. Le tube moteur est lui-même logé dans le tube d'enroulement qui est entraîné en rotation par l'arbre de sortie.

Le réducteur mécanique est classiquement constitué de trois étages de réduction réalisés par des engrenages et un tel réducteur mécanique est alors relativement bruyant et encombrant.

Pour éviter que le poids du tablier ou de la toile entraîne une rotation imprévue du tube d'enroulement, le moteur tubulaire comprend également un frein magnétique qui bloque la rotation de l'arbre moteur ou de l'arbre de sortie. Un tel frein est activé en permanence, et la mise en rotation de l'arbre de sortie nécessite donc pour le moteur de vaincre l'effet de freinage du frein, ce qui nécessite un moteur relativement puissant.

L'alimentation du frein magnétique est permanente et le moteur est alors obligé d'avoir une puissance supérieure aux besoins pour contrer cette force rémanente, en particulier au démarrage. En outre, le pilotage électronique du moteur est gêné par le rémanent du frein en vitesse très lente ce qui peut créer un blocage.

La mise en place de l'ensemble de ces éléments nécessite une longueur minimale pour le moteur tubulaire, ce qui empêche d'avoir des tabliers de longueur inférieure à cette longueur minimale.

Le document CN-A-101 752 952 et le document EP-A-1 326 000 divulguent des réducteurs mécaniques.

Un objet de la présente invention est de proposer un réducteur mécanique qui incorpore à la fois la fonction de frein et la fonction de réduction dans un encombrement réduit, permettant ainsi de s'abstenir de mettre en place un frein magnétique et permet la mise en place d'un moteur de moindre puissance.

A cet effet, est proposé un réducteur mécanique comportant :
- un arbre d'entrée prévu pour être entraîné en rotation par un moteur,
- un arbre de sortie coaxial avec l'arbre d'entrée,
- une vis sans fin montée coaxiale sur l'arbre d'entrée, et
- un train d'engrenages comportant :
   - trois premiers engrenages répartis uniformément autour de la vis sans fin, chacun engrenant avec la vis sans fin et monté mobile en rotation autour d'un premier axe dont la direction est perpendiculaire à l'axe de la vis sans fin,
   - pour chaque premier engrenage, un deuxième engrenage qui est conique et fixé de manière coaxiale au premier engrenage,
   - pour chaque deuxième engrenage, un troisième engrenage qui est conique, qui engrène avec le deuxième engrenage et qui est monté mobile en rotation autour d'un deuxième axe de rotation parallèle à l'axe de la vis sans fin,
   - pour chaque troisième engrenage, un quatrième engrenage qui est fixé de manière coaxiale au troisième engrenage, et
   - un cinquième engrenage monté coaxial sur l'arbre de sortie et qui engrène avec le ou chaque quatrième engrenage.

Avantageusement, les premiers engrenages sont décalés les uns par rapport aux autres dans la direction de l'axe de la vis sans fin.

Avantageusement, l'un, parmi l'arbre d'entrée et l'arbre de sortie, présente un alésage central, et l'autre présente une extension qui pénètre dans ledit alésage central.

L'invention propose également un ensemble motorisé comportant un moteur et un réducteur mécanique selon l'une des variantes précédentes, où l'arbre moteur est coaxial avec l'arbre d'entrée et l'entraîne en rotation.

L'invention propose également un système occultant comportant un tablier, un tube d'enroulement autour duquel le tablier s'enroule, un moteur tubulaire logé dans le tube d'enroulement et qui comprend un tube moteur et un ensemble motorisé selon la variante précédente logé dans le tube moteur, et où l'arbre de sortie entraîne le tube d'enroulement en rotation.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue en perspective d'un système occultant comprenant un réducteur mécanique selon l'invention,
la Fig. 2 est une vue en perspective d'un réducteur mécanique selon l'invention vue depuis l'entrée,
la Fig. 3 est une vue en perspective du réducteur mécanique selon l'invention vue depuis la sortie, et
la Fig. 4 est une vue en perspective du réducteur mécanique selon l'invention sans capot.

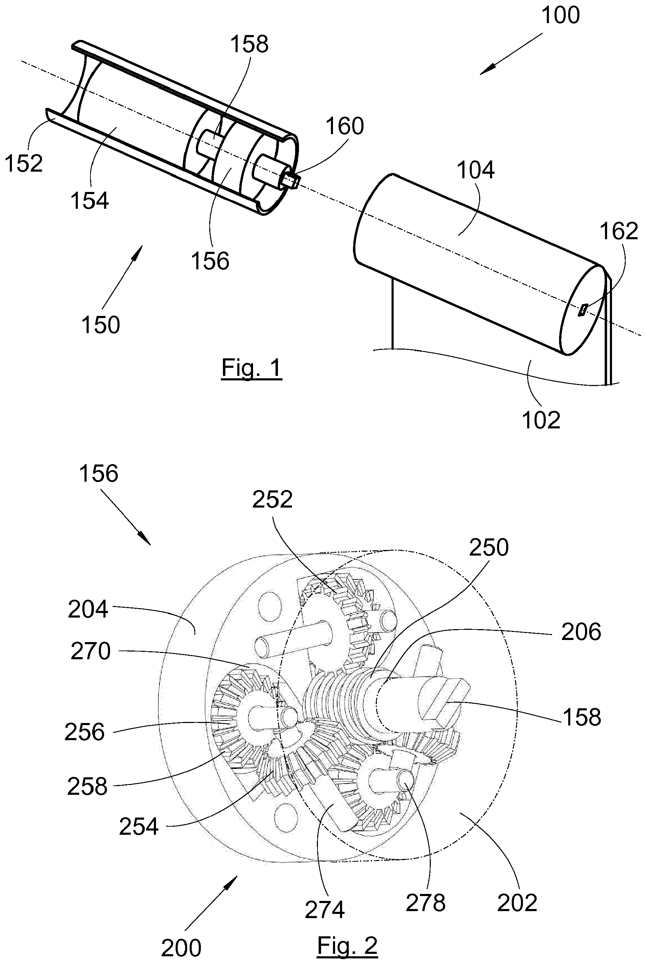

La Fig. 1 montre un système occultant 100 qui prend ici la forme d'un volet roulant.

Le système occultant 100 comprend un tablier 102, un tube d'enroulement 104 autour duquel le tablier 102 s'enroule, et un moteur tubulaire 150 logé dans le tube d'enroulement 104 et qui comprend un tube moteur 152, un moteur 154 et un réducteur mécanique 156 selon l'invention.

Le moteur 154 et le réducteur mécanique 156 sont logés fixes dans le tube moteur 152 qui est monté fixe par exemple sur la structure d'un bâtiment.

Le moteur 154 présente un arbre moteur 158 qui constitue l'arbre d'entrée du réducteur mécanique 156 qui comporte également un arbre de sortie 160 qui constitue une prise de force prévue pour entraîner en rotation le tube d'enroulement 104.

Dans le mode de réalisation de l'invention présenté sur la Fig. 1, l'arbre de sortie 160 présente une forme rectangulaire et le tube d'enroulement 104 comprend un trou rectangulaire 162 qui reçoit l'arbre de sortie 160. Ainsi, la rotation de l'arbre de sortie 160 entraîne la rotation du tube d'enroulement 104 dans un sens ou dans l'autre pour monter ou descendre le tablier 102.

Dans le cas d'un volet, le tablier 102 prend classiquement la forme de lattes.

Le système occultant 100 pourrait prendre une autre forme comme par exemple un store banne et le tablier serait alors constitué d'une toile.

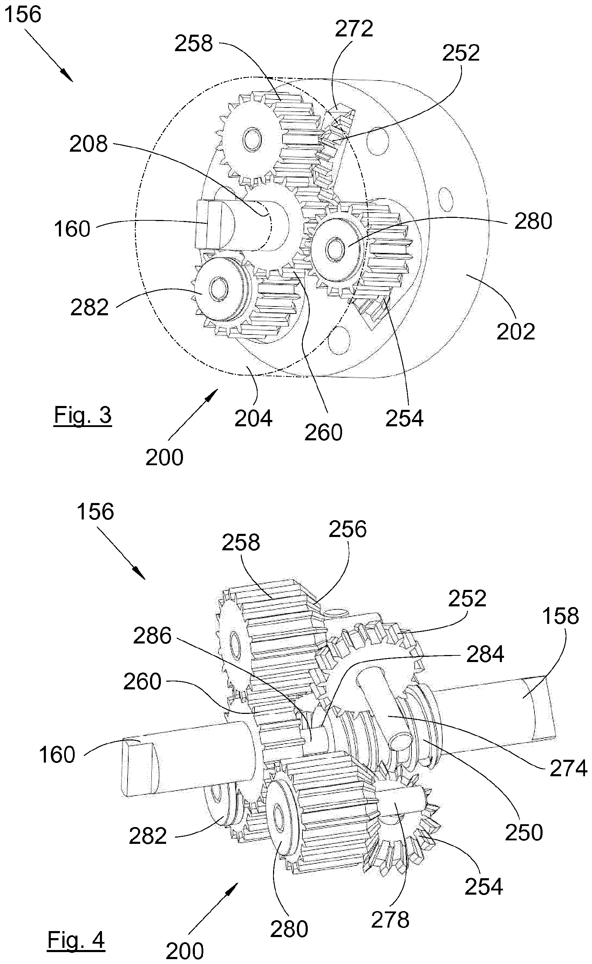

La Fig. 2 montre le réducteur mécanique 156 vu depuis l'arbre d'entrée 158, la Fig. 3 montre le réducteur mécanique 156 vu depuis l'arbre de sortie 160 et la Fig. 4 montre le réducteur mécanique 156 sans capot.

Entre l'arbre d'entrée 158 et l'arbre de sortie 160, le réducteur mécanique 156 comprend un train d'engrenages 200 qui est logé à l'intérieur d'un boîtier constitué d'un capot d'entrée 202 et d'un capot de sortie 204. Sur la Fig. 2, le capot d'entrée 202 est représenté en traits mixtes et sur la Fig. 3, le capot de sortie 204 est représenté en traits mixtes.

Les deux capots 202 et 204 sont fixés l'un à l'autre.

Le capot d'entrée 202 présente un alésage 206 qui permet le passage de l'arbre d'entrée 158 et le capot de sortie 204 présente un alésage 208 qui permet le passage de l'arbre de sortie 160.

L'arbre d'entrée 158 et l'arbre de sortie 160 sont coaxiaux entre eux et avec l'axe du moteur 154.

Le train d'engrenages 200 comprend :
- une vis sans fin 250 montée coaxiale sur l'arbre d'entrée 158,
- au moins un premier engrenage 252 engrenant avec la vis sans fin 250 et monté mobile en rotation autour d'un premier axe dont la direction est perpendiculaire à l'axe de la vis sans fin 250,
- pour chaque premier engrenage 252, un deuxième engrenage 254 qui est conique et fixé de manière coaxiale au premier engrenage 252,
- pour chaque deuxième engrenage 254, un troisième engrenage 256 qui est conique, qui engrène avec le deuxième engrenage 254 et qui est monté mobile en rotation autour d'un deuxième axe de rotation parallèle à l'axe de la vis sans fin 250,
- pour chaque troisième engrenage 256, un quatrième engrenage 258 qui est fixé de manière coaxiale au troisième engrenage 256, et
- un cinquième engrenage 260 monté coaxial sur l'arbre de sortie 160 et qui engrène avec le ou chaque quatrième engrenage 258.

L'angle d'hélice de premier engrenage 252 est choisi pour rendre le train d'engrenages 200 irréversible, le choix s'effectuant en particulier en fonction des matériaux utilisés. D'une manière générale, l'angle est préférentiellement inférieur à 10°, voire à 5°.

Avec un tel train d'engrenages 200, la vis sans fin 250 constitue un frein puisque la rotation du tube d'enroulement 104 sous l'effet du poids du tablier 102 est impossible puisque le train d'engrenages 200 constitue un système irréversible. Il n'est donc plus nécessaire de prévoir un frein magnétique et la puissance du moteur 154 peut être réduite surtout au moment du démarrage qui nécessite un appel de puissance et un réglage de vitesse jusqu'au point zéro.

Il est alors possible de réduire la taille de la carte électronique qui commande le système occultant 100, et plus particulièrement le moteur 154 et il est donc possible de réduire la longueur de l'ensemble et d'avoir un tablier 102 de largeur réduite.

En outre, l'encombrement du train d'engrenages 200 est réduit et le bruit qu'il génère est réduit. La réduction de l'encombrement du train d'engrenages par rapport à celui de l'état de la technique permet encore de réduire la longueur de l'ensemble et d'avoir un tablier 102 de largeur réduite.

L'utilisation des engrenages coniques 254 et 256 permet également un gain de place et d'obtenir un arbre de sortie 160 aligné avec l'arbre d'entrée 158.

Afin d'équilibrer les efforts sur la vis sans fin 250, le train d'engrenages 200 comporte au moins deux premiers engrenages 252 qui sont répartis uniformément autour de la vis sans fin 250.

Dans le mode de réalisation de l'invention présenté sur les Figs. 2 à 4, il y a trois premiers engrenages 252 répartis uniformément autour de la vis sans fin 250, c'est-à-dire ici à 120° les uns des autres.

En fonction de l'encombrement disponible, il est également possible de placer plus de trois premiers engrenages 252.

Comme mentionné ci-dessus, pour chaque premier engrenage 252, et quel que soit le nombre de premiers engrenages 252, le train d'engrenages 200 comprend un deuxième engrenage 254, un troisième engrenage 256 et un quatrième engrenage 258.

Dans le mode de réalisation de l'invention présenté sur les Figs. 2-4, chaque engrenage 252, 254, 256, 258 est monté sur un arbre 274, 278 et chaque engrenage 252, 254, 256, 258 et chaque arbre 274, 278 sont maintenus en position par le capot 202, 204 dans lequel ils sont logés. A cette fin, chaque capot 202, 204 présente pour chaque engrenage 252, 254, 256, 258 et chaque arbre 274, 278, un logement 270, 272 dans lequel logent ledit engrenage 252, 254, 256, 258 et ledit arbre 274, 278.

Lorsqu'il y a plusieurs premiers engrenages 252, en particulier trois, et pour éviter que tous les premiers engrenages 252 engrènent avec la même portion de la vis sans fin 250 au risque de l'user prématurément, ces premiers engrenages 252 sont décalés les uns par rapport aux autres dans la direction de l'axe de la vis sans fin 250.

Par exemple, si un premier engrenage 252 engrène avec la vis sans fin 250 à une position '0' le long de l'axe de la vis sans fin 250, le premier engrenage 252 suivant sera positionné à une distance Δ>0 du premier engrenage 252 précédent le long de l'axe de la vis sans fin 250, et ainsi de suite.

Les positions ou les longueurs des troisièmes engrenages 256 et quatrièmes engrenages 258 sont alors adaptées en fonction de la position du premier engrenage 252 avec lequel ils engrènent.

Dans le mode de réalisation de l'invention présenté ici, les troisièmes et quatrièmes engrenages 256 et 258 sont tous identiques afin de faciliter une production en série. L'adaptation de la position de chaque troisième et quatrième engrenage 256, 258 est alors assurée par la mise en place d'une rondelle 280, 282 entre le troisième et le quatrième engrenages 256, 258 et le fond du logement 270 dans lequel il loge.

Ici, l'un des troisièmes et quatrièmes engrenages 256, 258 n'est pas associé à une rondelle, le troisième et le quatrième engrenages 256, 258 suivants sont associés à une rondelle 280 d'épaisseur simple, et le troisième et le quatrième engrenages 256, 258 suivants sont associés à une rondelle 282 d'épaisseur double.

Bien sûr, il est possible d'utiliser des moyens différents, par exemple en positionnant le fond du logement 270 à des hauteurs différentes.

Afin d'assurer l'alignement entre l'arbre d'entrée 158 et l'arbre de sortie 160, l'un, parmi l'arbre d'entrée 158 et l'arbre de sortie 160, présente un alésage central 284, et l'autre présente une extension 286 qui pénètre dans ledit alésage central 284. Ici l'alésage central 284 est réalisé dans l'arbre d'entrée 158 et l'arbre de sortie 160 présente l'extension 286.

L'ajustement entre l'alésage central 284 et l'extension 286 est préférentiellement faible ou moyen.

Le moteur 154 et le réducteur mécanique 156 constituent un ensemble motorisé où l'arbre moteur est coaxial avec l'arbre d'entrée 158 et l'entraîne en rotation.

Un réducteur mécanique 156 tel que décrit ci-dessus peut être mis en œuvre dans de nombreux domaines, comme par exemple dans un lève-vitre de véhicule.

## Revendications

1. Réducteur mécanique (156) comportant :
- un arbre d'entrée (158) prévu pour être entraîné en rotation par un moteur (152),
- un arbre de sortie (160) coaxial avec l'arbre d'entrée (158),
- une vis sans fin (250) montée coaxiale sur l'arbre d'entrée (158), et
- un train d'engrenages (200) comportant :
- trois premiers engrenages (252) répartis uniformément autour de la vis sans fin (250), chacun engrenant avec la vis sans fin (250) et monté mobile en rotation autour d'un premier axe dont la direction est perpendiculaire à l'axe de la vis sans fin (250),
- pour chaque premier engrenage (252), un deuxième engrenage (254) qui est conique et fixé de manière coaxiale au premier engrenage (252),
- pour chaque deuxième engrenage (254), un troisième engrenage (256) qui est conique, qui engrène avec le deuxième engrenage (254) et qui est monté mobile en rotation autour d'un deuxième axe de rotation parallèle à l'axe de la vis sans fin (250),
- pour chaque troisième engrenage (256), un quatrième engrenage (258) qui est fixé de manière coaxiale au troisième engrenage (256), et
- un cinquième engrenage (260) monté coaxial sur l'arbre de sortie (160) et qui engrène avec le ou chaque quatrième engrenage (258).

2. Réducteur mécanique (156) selon la revendication 1, **caractérisé en ce que** les premiers engrenages (252) sont décalés les uns par rapport aux autres dans la direction de l'axe de la vis sans fin (250).

3. Réducteur mécanique (156) selon l'une des revendications 1 ou 2, **caractérisé en ce que** l'un, parmi l'arbre d'entrée (158) et l'arbre de sortie (160), présente un alésage central (284), et **en ce que** l'autre présente une extension (286) qui pénètre dans ledit alésage central (284).

4. Ensemble motorisé comportant un moteur (154) et un réducteur mécanique (156) selon l'une des revendications 1 à 3, où l'arbre moteur est coaxial avec l'arbre d'entrée (158) et l'entraîne en rotation.

5. Système occultant (100) comportant un tablier (102), un tube d'enroulement (104) autour duquel le tablier (102) s'enroule, un moteur tubulaire (150) logé dans le tube d'enroulement (104) et qui comprend un tube moteur (152) et un ensemble motorisé selon la revendication 4 logé dans le tube moteur (152), et où l'arbre de sortie (160) entraîne le tube d'enroulement (104) en rotation.

## Patentansprüche

1. Mechanisches Reduktionsgetriebe (156), welches aufweist:
- eine Eingangswelle (158), die dafür vorgesehen ist, von einem Motor (152) drehend angetrieben zu werden,
- eine Abtriebswelle (160), die zu der Eingangswelle (158) koaxial ist,
- eine Schnecke (250), die koaxial auf der Eingangswelle (158) angebracht ist, und
- ein Zahnradgetriebe (200), welches aufweist:
- drei erste Zahnräder (252), die gleichmäßig um die Schnecke (250) herum verteilt sind, wobei jedes mit der Schnecke (250) in Eingriff steht und drehbeweglich um eine erste Achse gelagert ist, deren Richtung senkrecht zur Achse der Schnecke (250) ist,
- für jedes erste Zahnrad (252), ein zweites Zahnrad (254), welches konisch ist und koaxial zu dem ersten Zahnrad (252) befestigt ist,
- für jedes zweite Zahnrad (254), ein drittes Zahnrad (256), welches konisch ist, welches mit dem zweiten Zahnrad (254) in Eingriff steht und welches drehbeweglich um eine zweite Drehachse gelagert ist, die parallel zur Achse der Schnecke (250) ist,
- für jedes dritte Zahnrad (256), ein viertes Zahnrad (258), welches koaxial zu dem dritten Zahnrad (256) befestigt ist, und
- ein fünftes Zahnrad (260), das koaxial auf der Abtriebswelle (160) gelagert ist und das mit dem oder jedem vierten Zahnrad (258) in Eingriff steht.

2. Mechanisches Reduktionsgetriebe (156) nach Anspruch 1, **dadurch gekennzeichnet, dass** die ersten Zahnräder (252) in der Richtung der Achse der Schnecke (250) zueinander versetzt sind.

3. Mechanisches Reduktionsgetriebe (156) nach einem der Ansprüche 1 oder 2, **dadurch gekennzeichnet, dass** die eine von der Eingangswelle (158) und der Abtriebswelle (160) eine zentrale Bohrung (284) aufweist, und dadurch, dass die andere eine Verlängerung (286) aufweist, welche in die zentrale Bohrung (284) eindringt.

4. Motorisierte Anordnung, welche einen Motor (154) und ein mechanisches Reduktionsgetriebe (156) nach einem der Ansprüche 1 bis 3 umfasst, wobei die Motorwelle koaxial mit der Eingangswelle (158) ist und sie drehend antreibt.

5. Verdunkelungssystem (100), welches einen Rollladenpanzer (102), ein Wickelrohr (104), um welches der Rollladenpanzer (102) aufgewickelt wird, einen Rohrantrieb (150), der in dem Wickelrohr (104) untergebracht ist und der ein Antriebsrohr (152) umfasst, und eine motorisierte Anordnung nach Anspruch 4, die in dem Antriebsrohr (152) untergebracht ist, aufweist, und wobei die Abtriebswelle (160) das Wickelrohr (104) drehend antreibt.

## Claims

1. Mechanical reduction gearbox (156) comprising:
- an input shaft (158) designed to be rotatably driven by a motor (152),
- an output shaft (160) coaxial with the input shaft (158),
- a worm (250) mounted coaxially on the input shaft (158), and
- a gearset(200) comprising:
- three first gears (252) distributed uniformly around the worm (250), each one meshing with the worm (250) and mounted with the ability to rotate about a first axis of which the direction is perpendicular to the axis of the worm (250),
- for each first gear (252), a second gear (254) which is a bevel gear and fixed coaxially to the first gear (252),
- for each second gear (254), a third gear (256) which is a bevel gear, which meshes with the second gear (254) and which is mounted with the ability to rotate about a second axis of rotation parallel to the axis of the worm (250),
- for each third gear (256), a fourth gear (258) which is fixed coaxially to the third gear (256), and
- a fifth gear (260) mounted coaxially on the output shaft (160) and which meshes with the or each fourth gear (258) .

2. Mechanical reduction gearbox (156) according to Claim 1, **characterized in that** the first gears (252) are offset relative to one another in the direction of the axis of the worm (250).

3. Mechanical reduction gearbox (156) according to either of Claims 1 and 2, **characterized in that**, of the input shaft (158) and the output shaft (160), one has a central bore (284), and **in that** the other has an extension (286) that enters the said central bore (284).

4. Motorized assembly comprising a motor (154) and a mechanical reduction gearbox (156) according to one of Claims 1 to 3, in which the motor shaft is coaxial with the input shaft (158) and drives the rotation of same.

5. Shutter system (100) comprising a shutter curtain (102), a roller tube (104) around which the shutter curtain (102) is rolled, a tubular motor (150) housed in the roller tube (104) and which comprises a drive tube (152) and a motorized assembly according to Claim 4 housed inside the drive tube (152), and wherein the output shaft (160) drives the rotation of the roller tube (104) .
